# EUROPEAN PATENT APPLICATION

(11) **EP 2 890 205 A1**
(43) Date of publication of application: **01.07.2015**
(21) Application number: 13831554.4
(22) Date of filing: 06.08.2013
(51) Int. Cl.: H04W 76/02

(54) **METHOD, DEVICE, AND SYSTEM FOR DEVICE-TO-DEVICE COMMUNICATION**

(30) Priority: 21.08.2012 CN 201210299075
(71) Applicant: ZTE Corporation, Shenzhen, Guangdong 518057 (CN)
(72) Inventor: XU, Hui, Shenzhen Guangdong 518057 (CN)
(74) Representative: Novagraaf Technologies
(86) International application number: PCT/CN2013/080915
(87) International publication number: WO 2014/029271

(57) **Abstract**

Method, device and system for device-to-device (D2D) communication are provided. The method includes: a first D2D user equipment receives a signalling from a network side of an operator, wherein the signalling is used for notifying the D2D user equipment to perform a D2D communication by using a WLAN; the first D2D user equipment directly communicate with one or more second D2D user equipments in the predetermined area by using the WLAN. Thereby the load of the network of the operator incurred by the D2D user equipment is reduced.

## Description

### Technical Field

The present invention relates to the field of communications, and in particular, to method, device and system for device-to-device (D2D) communication.

### Background

Machine to machine (M2M) refers to all techniques and means for connecting machines. The theory of M2M has appeared in the 90s of last century, but was still theoretical. Since 2000, with the development of the mobile communication technology, the networking of a machine with the mobile communication technology has become possible. M2M service has appeared in the market about 2002, and developed rapidly in the next few years and becomes the focus of various communication device suppliers and telecommunication operators. At present, the amount of machines in the throughout the globe is much larger than that of people, so the M2M technology is quite prospective in market.

Research on the scenario of M2M communication application shows that providing M2M communication over a mobile network has a great potential market. However many new requirements have been proposed for M2M services, and in order to enhance the competitiveness of the mobile network, it is necessary to optimize the existing mobile network to more effectively support M2M communication.

The existing mobile communication network is mainly designed for man-to-man communication, and is not sufficiently optimized for machine-to-machine and man-to-machine communication. In addition, it is also a key to the success of M2M communication deployment that an operator can provide M2M communication services with a low cost.

Based on the above-mentioned situation, it is necessary to study the solution for the mobile network to support M2M communication; and the solution will reuse the existing network to a maximum limit, and reduces the influence on the network by large amount of M2M communication and the complexity of operation and maintenance.

The competition in the current telecommunication market is more and more fierce, and the tariff continuously decreasing; and the human based communication market is tending to be saturated, and M2M is a brand new development opportunity to the operator.

In order to effectively use the mobile network resource, the 3rd generation partnership project (3GPP) has proposed a machine type communication (MTC), i.e. a service of communication from machine to machine, machine to man, the range of service thereof goes far beyond the previous communication of Human to Human (H2H, and MTC differs from the existing H2H communication mode a lot in aspects such as access control, charging, security, QoS, service mode, etc.

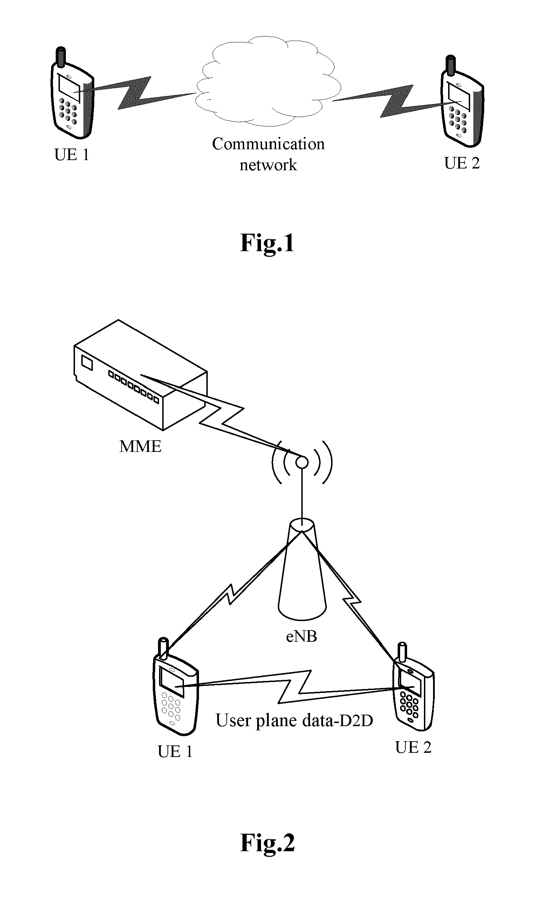

Device to device (D2D) communication refers to direct communication between adjacent devices, such as bluetooth; and due to the lack of network management and control, D2D communication generally employs unauthorized frequency spectrum, such as 2.4 GHz. With the rapid popularization of smart phones, many new applications have appeared, such as position based applications, social applications, etc. In a mobile communication network, the communication between user equipment must be performed via a network, as shown in Fig. 1, even though two devices are in adjacent positions, that is because the network operator needs to perform management and control on an authorized frequency spectrum; when both communication sides use the authorized frequency spectrum to perform communication, it must be through the network, so as to realize the resource scheduling, charging and management and the like of a communication activity by the network. In order to reduce the network load, some companies have proposed the assumption of direct communication between adjacent devices, as shown in Fig. 2, the solid line in the figure indicates a user-plane communication path, and the dashed line indicates a control-plane communication path. In MTC, the demand for direct communication between MTC devices also exists, for example, between MTC devices and between an MTC device and a gateway; and 3GPP has now started to study D2D communication. The current D2D comprises two aspects: discovery and communication. Discovery refers to identifying a user equipment with a D2D capability in a neighbouring area, and communication refers to the case where a D2D user equipment performs user-plane data transmission through direct communication between users or through an eNB.

For the problem in the related art that the communication between D2D user equipments results in a large network load of the operator, there is no effective solution which has been proposed yet.

### Summary

For the problem in the related art that the communication between D2D user equipment results in a large network load of the operator, a method, device and system for D2D communication are provided in the embodiments of the present invention, so as to at least solve the problem.

According to an aspect of the present invention, provided is a method for device-to-device (D2D) communication. The method includes: a first D2D user equipment receives a signalling from a network side of the operator, wherein the signalling is used for notifying the D2D user equipment to use a wireless local area network (WLAN) to perform a D2Dcommunication; the first D2D user equipment uses the WLAN to perform direct communication with one or more second D2D user equipment in a predetermined area.

Preferably, before the first D2D user equipment receives the first signalling from the network side of the operator, the method further includes: the first D2D device discovers the one or more second D2D user equipment, and sends a WLAN communication request to the network side of the operator; or the network side of the operator discovers the first D2D user equipment and the one or more second D2D user equipment in the predetermined area.

Preferably, the WLAN communication request includes one of the following: an identifier of the second D2D user equipment, an application identifier and a WLAN communication identifier.

Preferably, the signalling further includes: WLAN communication identification information, wherein the WLAN communication indication information further includes: an identifier of the D2D user equipment participating the WLAN communication and/or the parameters of the WLAN communication, wherein the WLAN communication is direct communication between user equipment performed via the WLAN.

Preferably, after the first D2D user equipment uses the WLAN to perform communication with the second D2D user equipment in a predetermined area, the method further includes: the first D2D use equipment switches to the network of the operator under the control of the network side of the operator; and the switched first D2D user equipment performs a communication with the one or more D2D user equipment in the network of the operator.

Preferably, the predetermined area is an area satisfying D2D discovery or an area satisfying D2D communication.

According to another aspect of the present invention, a D2D communication method is provided, the method includes: the network side of the operator receives, a wireless local area network (WLAN) communication request sent by the first D2D user equipment; or the network side of the operator discovers the first D2D user equipment and one or more second D2D user equipment in the predetermined area, wherein the WLAN communication request is used for requesting the first D2D user equipment to perform a D2Dcommunication with one or more second D2D user equipment discovered by the first D2D user equipment in the predetermined area; and the network side of the operator sends , a signalling to the first D2D user equipment to notify the first D2D user equipment to perform a direct communication with the one or more D2D user equipment by using the WLAN.

Preferably, the WLAN communication request includes one of the following: an identifier of the second D2D user equipment, an application identifier and a WLAN communication identifier.

Preferably, before network side of the operator sends the signalling to the first D2D user equipment, the method further includes: the network side of the operator determines that the first D2D user equipment and the one or more second D2D user equipment satisfy the condition of WLAN communication.

Preferably, the signalling further includes: WLAN communication identification information, wherein the WLAN communication indication information further includes: an identifier of the D2D user equipment participating the WLAN communication and/or the parameters of the WLAN communication.

Preferably, after the network side of the operator sends the signalling to the first D2D user equipment, the method further includes: when it is judged that a preset condition for switching from the WLAN to the network of the operator is satisfied, the first D2D user equipment and the one or more D2D user equipment is switched to the network of the operator for communication under the control of the network side of the operator; and when it is judged that a preset condition for switching from the network of the operator to the WLAN is satisfied, the first D2D user equipment and the one or more D2D user equipment is switched to the WLAN for communication under the control of the network side of the operator.

Preferably, the first condition includes at least one of the following: the policy of the operator, network load and the distance between the D2D communication devices; and the second condition includes at least one of the following: the policy of the operator, network load and the distance between the D2D communication devices.

According to another aspect of the present invention, provided is a device for D2D communication, which is applied to a D2D user equipment, includes: a first receiving module, which is configured to receive a signalling from a network side of the operator, wherein the signalling is used for notifying the user equipment to use a wireless local area network (WLAN) to perform a D2D communication; and a first communication module, which is configured to use the WLAN to perform direct communication with one or more second D2D user equipment in a predetermined area.

Preferably, the device further includes: a first discovery module, which is configured to discover the one or more second D2D user equipment; and a sending module, which is configured to send a WLAN communication request to the network side of the operator.

Preferably, the device further includes: a switching module is configured to switch to the network of the operator under the control of the network side of the operator; and a second communication module is configured to perform communication with the one or more D2D user equipment in the network of the operator.

According to another aspect of the present invention, provided is a device for D2D communication, which is applied to a network side of the operator, the device includes: a third receiving module, which is configured to receive the wireless local area network WLAN communication request sent by the first D2D user equipment, wherein the WLAN communication request is used for requesting the first D2D user equipment to perform a D2D communication with one or more second D2D user equipment discovered by the first D2D user equipment in the predetermined area; or a second discovery module, which is configured to discover the first D2D use equipment and one or more second D2D user equipment in the predetermined area; and a sending module, which is configured to send a signalling to the first D2D user equipment to notify the first D2D user equipment to perform direct communication with the one or more D2D user equipment over the WLAN.

Preferably, the device further includes a determination module, which is configured to determine that the first D2D user equipment and the one or more second D2D user equipment satisfy the condition of WLAN communication.

Preferably, the device further includes: a first control module, which is configured to control the first D2D user equipment and the one or more D2D user equipment to switch to the network of the operator for communication, when it is judged that a preset condition for switching from the WLAN to the network of the operator is satisfied; and a second control module, which is configured to control the first D2D user equipment and the one or more D2D user equipment to switch to the WLAN for communication, when it is judged that a preset condition for switching from the network of the operator is satisfied.

According to another aspect of the present invention, provided is a system for D2D communication, includes the above-mentioned device for D2D communication (applied to the D2D user equipment) and the above-mentioned device D2D communication (applied to the network side of the operator.

By means of the embodiments of the present invention, after receiving the first signalling from the network side of the operator, the first D2D user equipment perform a D2D communication with one or more second D2D user equipment in the predetermined area by using the WLAN, which realizes the communication between D2D user equipments over the WLAN, and solves the problem in the related art that the communication between D2D user equipment results a large network load of the operator, thus the effect of reducing the load of the network of the operator by the D2D device is achieved and the utilization rage of the WLAN resource is improved.

### Brief Description of the Drawings

Drawings, provided for further understanding of the disclosure and forming a part of the specification, are used to explain the disclosure together with embodiments of the disclosure rather than to limit the disclosure. In the drawings:
Fig. 1 is a schematic diagram of network communication according to related technology;
Fig. 2 is a schematic diagram of D2D communication according to related technology;
Fig. 3 is a first flowchart of a method for D2D communication according to an embodiment of the present invention;
Fig. 4 is a second flowchart of a D2D communication method according to an embodiment of the present invention;
Fig. 5 is a first structural block diagram of a device for D2D communication according to an embodiment of the present invention;
Fig. 6 is a preferred first structural block diagram of a device for D2D communication according to an embodiment of the present invention;
Fig. 7 is a second structural block diagram of a device for D2D communication according to an embodiment of the present invention;
Fig. 8 is a another second structural block diagram of a device for D2D communication according to an embodiment of the present invention;
Fig. 9 shows a structural block diagram of a system for D2D communication according to an embodiment of the present invention;
Fig. 10 is a flowchart I of a method for D2D communication according to an embodiment of the present invention;
Fig. 11 is a flowchart II of a method for D2D communication according to an embodiment of the present invention;
Fig. 12 is a flowchart III of a method for D2D communication according to an embodiment of the present invention;
Fig. 13 is a flowchart IV of a method for D2D communication according to an embodiment of the present invention;
Fig. 14 is a structural block diagram of a system for D2D communication realized with a WLAN according to an embodiment of the present invention; and
Fig. 15 is a structural block diagram of a user equipment for D2D communication realized with a WLAN according to an embodiment of the present invention.

### Detailed Description of the Embodiments

In real communication, the wireless local area network (WLAN) operates in an unauthorized frequency band of 2.5 GHz or 5 GHz, and forms a local area network in a wireless manner. The local area network formed by the WLAN using the technique of radio frequency (RF) enables the wireless local area network to let the user through using a simple access architecture, which is not limited to the wiring of the network and is convenient for sending and receiving data. In the following preferred implementation of the application, a direct communication between devices also exists in WLAN, the D2D communication requirement is realized by using the direct communication in WLAN.

In the following preferred embodiment, what are recorded are that when it is discovered that D2D user equipments are within the communication range of the WLAN, determining which network element that realizing D2D communication with the WLAN is decided by, and realizing the switch of the D2D device between the WLAN communication mode and the network communication mode have realized that the communication between D2D user equipment is realized via the WLAN, thus solving the problem in the related art that the D2D communication results in a large load of the network side of the operator.

The disclosure is described below with reference to the accompanying drawings and embodiments in detail. Note that, the embodiments of the disclosure and the features of the embodiments can be combined with each other if there is no conflict.

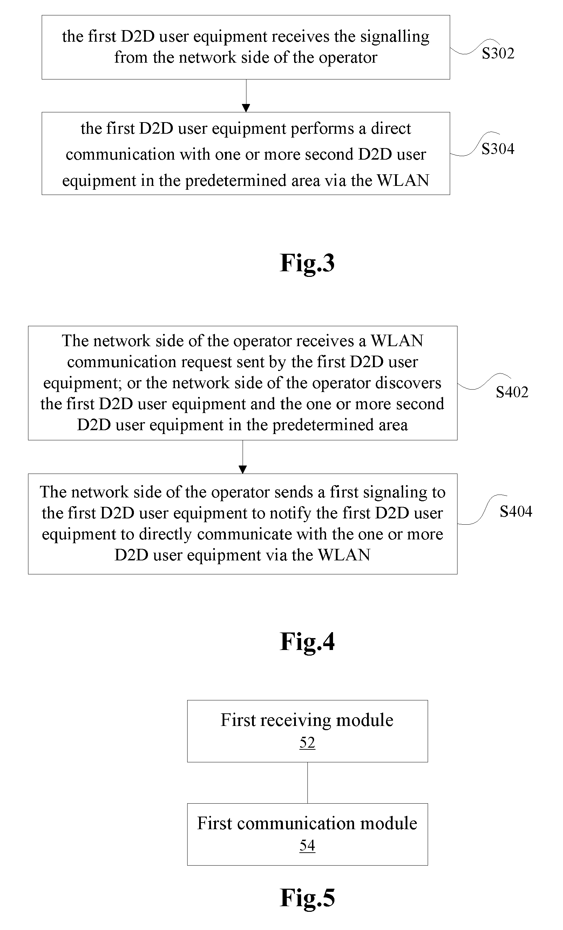

A method for D2D communication is provided in this preferred embodiment, Fig. 3 is a first flowchart of a method for D2D communication according to an embodiment of the present invention, as shown in Fig. 3, the method includes step S302 to step S304 as follows:
Step S302: a first D2D user equipment receives a signalling from a network side of the operator, wherein the signalling is used for notifying the first D2D user equipment to perform a D2D communication by using a WLAN.
Step S304: the first D2D user equipment uses the WLAN to perform a direct communication with one or more second D2D user equipment in a predetermined area.

By means of the above-mentioned steps, after receiving the first signalling from the network side of the operator, the first D2D user equipment perform a D2D communication with one or more second D2D user equipment in the predetermined area by using the WLAN, which realizes the communication between D2D user equipments over the WLAN, thus the effect of reducing the load of the network of the operator by the D2D device is achieved and the utilization rage of the WLAN resource is improved.

Preferably, in a real communication process, after receiving the signalling, the first D2D user equipment may also choose not to use the WLAN to perform direct communication with one or more second D2D user equipment in a predetermined area according to the first D2D user equipment own requirements or the configuration of the system. More preferably, the first D2D user equipment may feed back the network side of the operator a message for indicating that the first D2D does not use the WLAN to perform direct communication.

In implementation, the one or more D2D user equipment can be discovered by the first D2D user equipment, or by the network side of the operator.

Method I: when the first D2D device discovers the one or more second D2D user equipment in the predetermined area, the first D2D device sends a WLAN communication request to the network side of the operator, and then the network side of the operator sends a signalling to the first D2D user equipment.

Method II: when the first D2D user equipment and the one or more second D2D user equipment are discovered by the network side of the operator in the predetermined area, the network side of the operator sends a signalling to the first D2D user equipment.

Preferably, the predetermined area is an area satisfying D2D discovery or an area satisfying D2D communication. The area satisfying D2D discovery and the area satisfying D2D communication can be different from each other.

In order to improve the reliability of the WLAN communication request, the WLAN communication request includes one of the following: the identifier of the second D2D user equipment, the application identifier and the identifier of the WLAN communication.

During the implementation of the embodiment, in order to improve the reliability of the communication between the D2D user equipments, WLAN communication identification information can also be carried in the first signalling, wherein the WLAN communication indication information includes: the identifiers of the D2D user equipments participating the WLAN communication and/or the parameters of the WLAN communication, wherein the WLAN communication is a direct communication among the user equipments via the WLAN.

In an preferred example, after the first D2D user equipment uses the WLAN to perform communication with the second D2D user equipment in a predetermined area, the first D2D use equipment is switched to the network of the operator under the control of the network side of the operator; and the switched first D2D user equipment perform a communication with the one or more D2D user equipment in the network of the operator. The preferred method realizes the switching of the communication of D2D user equipment between the WLAN and the network of the operator.

Preferably, the predetermined area is an area satisfying D2D discovery or an area satisfying D2D communication.

A method for D2D communication is provided in this preferred embodiment, Fig. 4 is a first flowchart of a method for D2D communication according to an embodiment of the present invention, as shown in Fig. 4, the method includes step S402 to step S404 as follows:
Step S402: the network side of the operator receives a WLAN communication request sent by the first D2D user equipment; or the network side of the operator discovers the first D2D user equipment and one or more second D2D user equipment in the predetermined area, wherein the WLAN communication request is used for requesting the first D2D user equipment to perform a D2D communication with one or more second D2D user equipment discovered by the first D2D user equipment in the predetermined area.
Step S404: the network side of the operator sends a signalling to the first D2D user equipment to trigger the first D2D user equipment to directly communicate with the one or more D2D user equipment through the WLAN.

By means of the above-mentioned steps, after receiving the first signalling from the network side of the operator, the first D2D user equipment perform a D2D communication with one or more second D2D user equipment in the predetermined area by using the WLAN, which realizes the communication between D2D user equipments over the WLAN, thus the effect of reducing the load of the network of the operator by the D2D device is achieved and the utilization rage of the WLAN resource is improved.

In a preferred implementation, the WLAN communication request includes one of the following: the identifier of the second D2D user equipment, the application identifier and the identifier of the WLAN communication.

In order to improve the reliability of the WLAN, before step S402, the network side of the operator determines that the first D2D user equipment and the one or more second D2D user equipment satisfy the condition of WLAN communication.

In order to improve the reliability of the WLAN communication, the signalling further carries WLAN communication identification information, wherein the WLAN communication indication information includes: the identifiers of the D2D user equipments associated with the WLAN communication and/or the parameters of the WLAN communication.

During the implementation of the present embodiment, after step S404, when it is judged that a preset first condition for switching from the WLAN to the network of the operator is satisfied, the network side of the operator controls the first D2D user equipment and the one or more D2D user equipment to switch to the network of the operator for communication; when it is judged that a preset second condition for switching from the network of the operator to the WLAN is satisfied, the network side of the operator controls the first D2D user equipment and the one or more D2D user equipment to switch to the WLAN for communication. The preferred method realizes the switching of the communication of D2D user equipment between the WLAN and the network of the operator.

Preferably, the first condition includes at least one of the following: the policy of the operator, network load and the distance between the D2D communication devices; and the second condition includes at least one of the following: the policy of the operator, network load and the distance between the D2D communication devices.

It should be noted that the steps shown in the flowchart of the drawings can be executed, for example, in a computer system with a set of instructions executable by a computer, in addition, a logic order is shown in the flowchart, but the shown or described steps can be executed in a different order under some conditions.

In another embodiment, software for D2D communication is also provided, the software is used for executing the above-mentioned embodiment and the preferred technical solution described in the preferred embodiments.

In another embodiment, a storage medium is also provided, the above-mentioned D2D communication software is stored in the storage medium, and the storage medium includes but not be limited to: disk, floppy disk, hard disk, erasable storage, etc.

Also provided in the embodiments of the present invention is a device for device-to-device (D2D) communication, which is applied to a D2D user equipment. The device for D2D communication can be used for realizing the above-mentioned method for D2D communication and preferred implementation, which has already been explain and will not be described any more, the modules related in the device for D2D communication is now explained. As used herein below, the term "module" can realize the combination of software and/or hardware with a predetermined function. Although the system and method described in the embodiments below can be realized with software, hardware or the combination of software and hardware are also possible and can be conceived.

Fig. 5 is a first structural block diagram of a device for D2D communication according to an embodiment of the present invention; and as shown in Fig. 5, the device includes: a first receiving module **52,** a first communication module **54,** and the structure is described in detail below.
the first receiving module **52** is configured to receive a signalling from a network side of the operator, wherein the signalling is used for notifying the D2D user equipment to use a WLAN to perform a D2D communication; and the first communication module **54,** connected to the first receiving module **52,** is configured to use the WLAN to perform direct communication with one or more second D2D user equipment in a predetermined area.

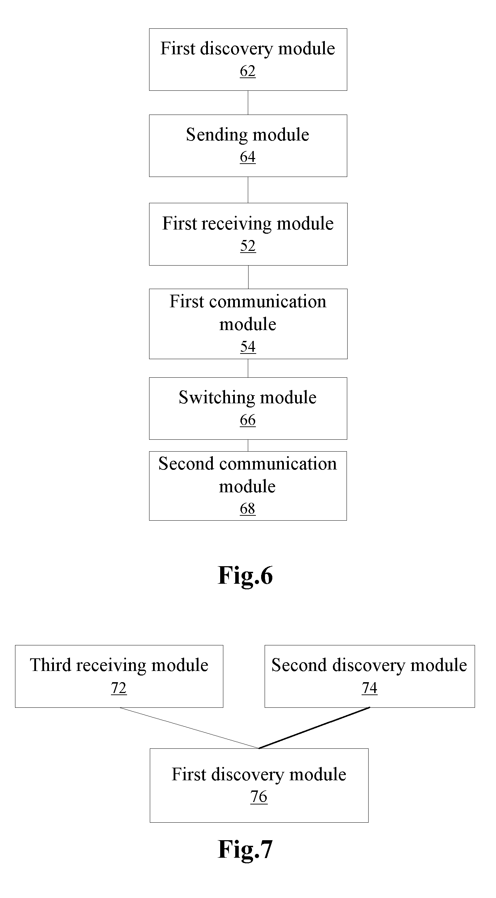

Fig. 6 is a preferred first structural block diagram of a device for D2D communication according to an embodiment of the present invention; and as shown in Fig. 6, the device further includes: a first discovery module **62,** a sending module **64,** a switching module **66** and a second communication module **68,** and the structure is described in detail below.

Preferably, the device further includes: a first discovery module **62,** configured to discover the one or more second D2D user equipment; and a sending module **64** connected to the first discovery module **62,** configured to send a WLAN communication request to the network side of the operator.

Preferably, the device further includes: a switching module **66,** configured to switch to the network of the operator under the control of the network side of the operator; and a second communication module **68** connected to the switching module **66,** configured to perform communication with the one or more D2D user equipment in the network of the operator.

In another embodiment, software for D2D communication is also provided, the software is used for executing the above-mentioned embodiment and the preferred technical solution described in the preferred embodiments.

In another embodiment, a storage medium is also provided, the above-mentioned D2D communication software is stored in the storage medium, and the storage medium includes but not be limited to: disk, floppy disk, hard disk, erasable storage, etc.

A device for D2D communication, applied to the network side of the operator, is also provided in the embodiments of the present invention, the device for D2D communication can be used for realizing the above-mentioned method for D2D communication and preferred implementation, which has already been explain and will not be described any more, the modules related in the device for D2D communication is now explained. As used herein below, the term "module" can realize the combination of software and/or hardware with a predetermined function. Although the system and method described in the embodiments below can be realized with software, hardware or the combination of software and hardware are also possible and can be conceived.

Fig. 7 is a second structural block diagram of a device for D2D communication according to an embodiment of the present invention; and as shown in Fig. 7, the device includes: a third receiving module **72,** a second discovery module **74** and a sending module **76,** and the structure is described in detail below.

The third receiving module **72** is configured to receive the wireless local area network WLAN communication request sent by the first D2D user equipment, wherein the WLAN communication request is used for requesting the first D2D user equipment to perform a D2D communication with one or more second D2D user equipment discovered by the first D2D user equipment in the predetermined area; or the second discovery module **74** is configured to discover the first D2D use equipment and one or more second D2D user equipment in the predetermined area; and a sending module **76,** connected to the third receiving module **72** and the second discovery module **74,** is configured to send a signalling to the first D2D user equipment, notifying the first D2D user equipment to use the WLAN to perform direct communication with the one or more D2D user equipment.

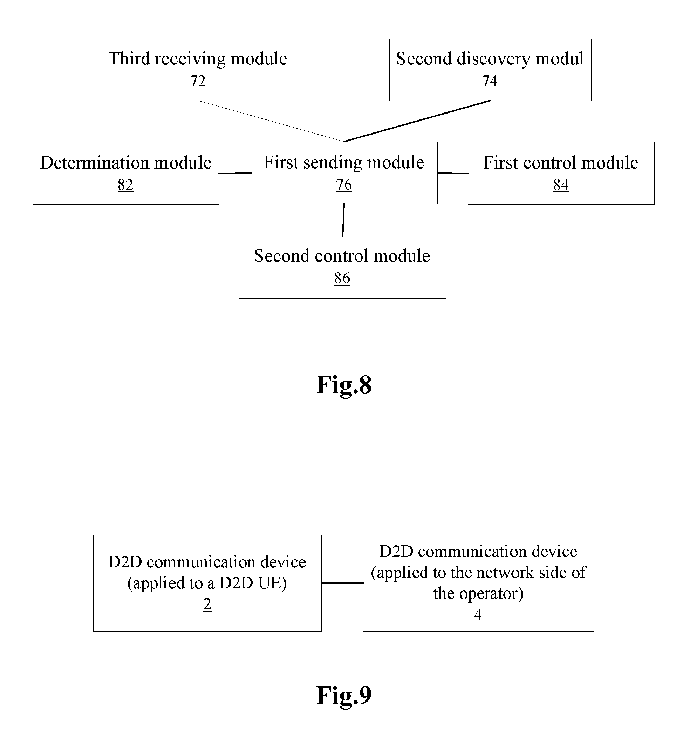

Fig. 8 is a preferred second structural block diagram of a device for D2D communication according to an embodiment of the present invention; and as shown in Fig. 8, the device further includes: a determination module **82,** a first control module **84** and a second control module **86,** and the structure is described in detail below.

Preferably, the device further includes: the determination module **82,** connected to the first sending module **76,** which is configured to determine that the first D2D user equipment and the one or more second D2D user equipment satisfy the condition of WLAN communication.

Preferably, the device further includes: a first control module **84,** configured to control the first D2D user equipment and the one or more second D2D user equipment to switch to the network of the operator for communication, when it is judged that a preset first condition for switching from the WLAN to the network of the operator is satisfied; and
a second control module **86**, configured to control the first D2D user equipment and the one or more second D2D user equipment to switch to the WLAN for communication, when it is judged that a preset second condition for switching from the network of the operator is satisfied.

A system for D2D communication is also provided in this preferred embodiment. Fig. 9 shows a structural block diagram of a system for D2D communication according to an embodiment of the present invention; and as shown in Fig. 9, the system includes a D2D communication device 2 (applied to a D2D user equipment) and a D2D communication device 4 (applied to the network side of the operator), wherein the structure of the D2D communication device 2 is as shown in fig. 5 or 6, and the structure of the D2D communication device 4 is as shown in fig. 7 or 8, which will not be described herein any more.

Description will now be made in combination with the following embodiments. The following embodiments are in combination with the above-mentioned embodiments and the preferred implementations.

### Embodiment I

A method for a WLAN to be used in D2D communication is provided in this preferred embodiment, and the method includes: a network side or a D2D user equipment discovers another D2D user equipment in a neighbouring area; and the network side notifies or the D2D user equipment requests using the WLAN to realize D2D communication; and the network side determines the switching of the D2D user equipment between two modes, i.e. WLAN communication and network communication. By means of the present invention, a D2D user equipment using the WLAN to perform communication can be realized.

By means of the technical solution of this preferred embodiment, the effects of reducing the load of the network and reducing the reliability of D2D communication on the network.

### Embodiment II

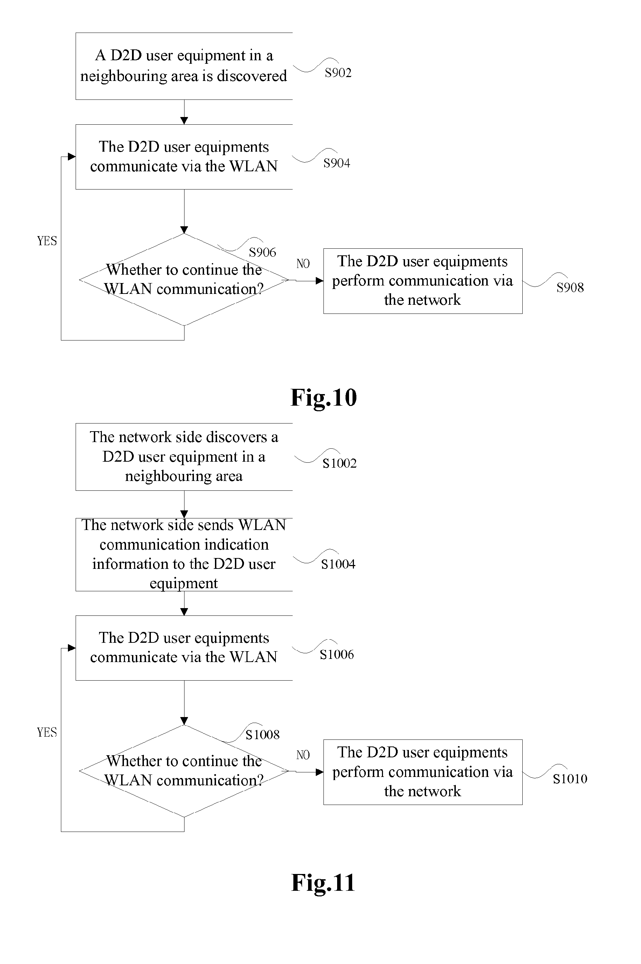

A method for a WLAN to be used in D2D communication is provided in this preferred embodiment. Fig. 9 is a first flowchart of a method for D2D communication according to an embodiment of the present invention, as shown in Fig. 10, the method includes step S902 to step S908 as follows:
Step S902: discovering a D2D user equipment in a neighbouring area.

Preferably, the neighbouring area is an area which satisfies a predetermined rule, that is, a D2D user equipment can be discovered in this area. In this preferred embodiment, the neighbouring area discovered through D2D is different from the neighbouring area of D2D communication, which can be respectively defined.

The discovery in this preferred embodiment can be performed via a network side device and/or a D2D user equipment, and the network side device or D2D user equipment searches a D2D user equipment in a neighbouring area in a specific time period, wherein the specific time period refers to a period of time set for D2D discovery, and the D2D user equipment sends a signal over a inherent resource in this time period, and accordingly, the network side device and/or other D2D user equipment searches the signal over the inherent resource. The above-mentioned network side device refers to an eNB (evolved NodeB), and it should be explained that the process of discovery should be perform over an authorized frequency band, i.e. not through the existing discovery mode of the WLAN.

The D2D user equipment in this preferred embodiment refers to: a D2D user equipment with a D2D discovery and communication capability and having registered to use the D2D function. It should be noted that the D2D user equipment in this application has a WLAN communication function.

In this preferred embodiment, if the network side device has discovered a D2D user equipment in a neighbouring area, the network side can send a notification message to a D2D user equipment in a neighbouring area; and generally, the user equipment which has registered the D2D and has started the D2D discovery function can receive the notification message.

In this preferred embodiment, if the user equipment has found another D2D user equipment in the neighbouring area, the user equipment can send indication information to the network side, so as to inform same of the discovered D2D user equipment.

Step S904: the D2D user equipment uses the WLAN to perform communication.

In this preferred embodiment, WLAN communication can be performed when it is notified by the network side or requested by the D2D user equipment;
and the notification of the network side includes the identifiers of two parties or plurality parties of the communication, WLAN communication parameters, etc., wherein the identifier can be the inherent identifier of the UE, such as IMSI, MSISDN, IMEI, etc., or the code name of the UE, such as the IPone-4 of Zhangsan. The WLAN communication parameters includes the identifier of the WLAN communication, the resources of the WLAN communication, the strength of the WLAN signal, and the distance between D2D user equipments, etc., wherein the WLAN communication identifier is used for indicate that a communication should be performed by using WLAN.

Preferably, the network side judges if it is possible to perform WLAN communication according to the distance between the user equipments and the capability of the user equipments; and if the distance between the user equipments within the WLAN communication range and the user equipments have the capability of WLAN communication, then a WLAN communication can be performed, otherwise it is impossible to perform the WLAN communication.

As a relatively preferred implementation, the D2D user equipment request includes the identifier of the opposite side of communication, the WLAN communication indication, etc.; and the network side determines whether two parties or a plurality of parties of the communication can perform WLAN communication, if yes, then the network side sends an acknowledgement response and the WLAN communication parameter to the D2D user equipment, otherwise the network side sends refusal response and a refusal reason to the D2D user equipment.

In this preferred embodiment, the WLAN communication is autonomously performed by the D2D device, that is, the network side does not control the resource of the WLAN communication; for the security and charging function, it can be performed according to the local policy of the operator.

Preferably, during WLAN communication, the user-plane data is directly transmitted via the user equipment, and the control-plane signalling is accomplished via the network or D2D user equipment, so as to realize the management and control of the WLAN communication.

In this preferred embodiment, if the communication between D2D user equipment is ended, then the D2D user equipment disconnects to release the corresponding communication resource.

Step S906: whether to perform communication via the WLAN is judged, if yes, step S904 is executed, otherwise step S908 is executed.

As a relatively preferred implementation, the judgement can be performed via the user equipment or network side device. If it is detected by the user equipment that the quality of the communication signal is lower than the WLAN threshold, then an indication is sent to the network side, and the network side determines, according to the indication, whether to use the network to continue communication; or if the network side device detects that the user equipment goes beyond the communication range (neighbouring area) of the D2D, then the network side determines whether to switch to continue communication via the network, and sends indication information to the user equipment.

Step S908: the D2D user equipment performs communication via the network, and then the flow ends.

In this preferred embodiment, the D2D user equipment is unable to continue performing communication via the WLAN, and the network side switches the user equipment to continuing communication via the network;

Preferably, if the user equipment is located in an area covered by no network, such as a scenario of public security, then the user equipment will not be able to continue communication via a network, and the communication is interrupted at this moment. When the network communication is ended, the user equipment sends a communication ending request to the network side, and the network side disconnects and releases the communication resource.

### Embodiment III

A method for a WLAN to be used in D2D communication is provided in this preferred embodiment, and the scenario of this preferred embodiment is: a network side discovers a D2D user equipment and indicates to perform communication using the WLAN. Fig. 11 is a second flowchart of a method for D2D communication according to an embodiment of the present invention, as shown in Fig. 11, the method includes step S1002 to step S1010 as follows:
Step S1002: the network side discovers two D2D devices in a neighbouring area.

In this preferred embodiment, the neighbouring area is a neighbouring area defined for D2D discovery.

Preferably, the D2D user equipments include two or more D2D user equipments.

Step S1004: the network side sends indication for adopting WLAN communication to the D2D user equipments.

In this preferred embodiment, two conditions should be satisfied in WLAN communication:
condition 1: the user equipments have the capability of WLAN communication;
condition 2: the distance between user equipments is within the WLAN communication range.

The network side judges whether the user equipments have the capability of WLAN communication by querying register data, for example, the network side queries the register data of the user equipments from the HSS/HLR.

In this preferred embodiment, if the network side has determined that the UEs satisfy the conditions of WLAN communication, then the network side sends WLAN communication indication information to the D2D user equipments.

Preferably, the WLAN communication identification information includes: the identifier of the user equipments participating the WLAN communication and the parameters of the WLAN communication.

Step S1006: the D2D user equipments use the WLAN to perform communication.

Preferably, the D2D user equipments use the received WLAN communication parameters to perform WLAN communication.

In order to realize the security of WLAN communication, charging and the like can be performed by using the existed relevant flow of WLAN, and the network side monitors the WLAN communication between D2D devices, so as to guarantee the quality of service (QoS) of the communication.

Step S1008: whether to perform communication via the WLAN is judged, if the judgement result is yes, step S1006 is executed, otherwise step S1010 is executed.

It should be noted that the operation of this step is the same as that of step S908, so it will not be described any more.

Step S1010: the D2D user equipments continue the communication via the network, and then the flow ends.

It should be noted that this step is the same as step S910, so it will not be described any more.

### Embodiment IV

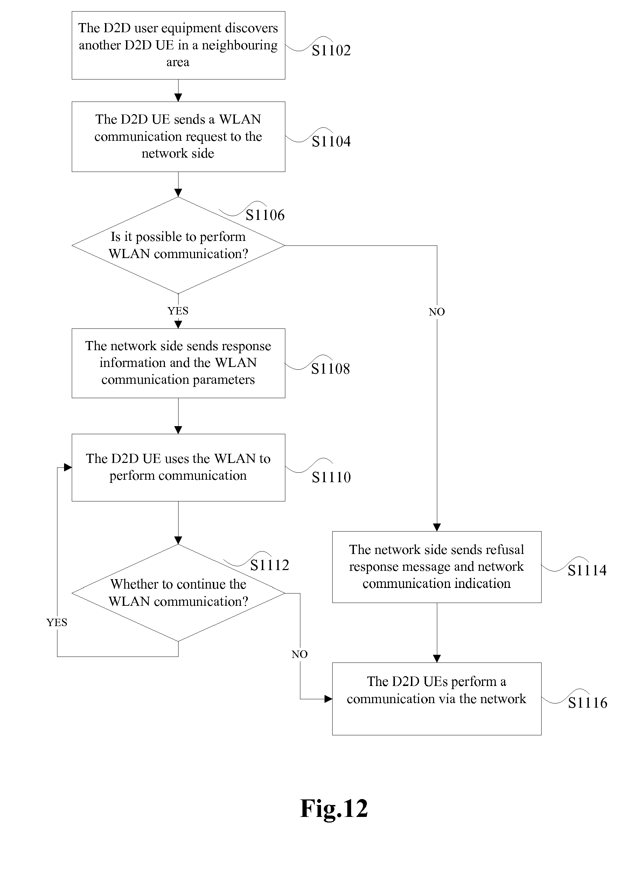

A method for a WLAN to be used in D2D communication is provided in this preferred embodiment, and the scenario of this preferred embodiment is: a user equipment discovers a D2D user equipment and requests WLAN communication. Fig. 12 is a third flowchart of a method for D2D communication according to an embodiment of the present invention, as shown in Fig. 12, the method includes step S1102 to step S1116 as follows:
Step S1102: the D2D user equipment discovers another D2D user equipment in a neighbouring area.

In this preferred embodiment, the D2D user equipment starts the discovery function, and detects D2D user equipment in a neighbouring area, wherein the detection period is predetermined; during the discovery period, the D2D user equipment sends a signal over a predetermined resource, and accordingly, the D2D user equipment detects the signal from other D2D user equipments in the discovery period.

Step S1104: the D2D user equipment sends the network side a request of using the WLAN for communication.

In this step, an application over the D2D user equipment initiates a request to trigger the D2D user equipment to send a WLAN communication request to the network side, wherein the WLAN communication request includes: the identifier of the D2D user equipment at the opposite side, the identifier of the application, the identifier of the WLAN communication, etc.

Step S1106: the network side judges whether WLAN communication can be performed, if the judgement result is yes, go to step S1108, otherwise step S1114 is executed.

In this preferred embodiment, two conditions should be satisfied in the WLAN communication:
condition 1: the user equipments have the capability of WLAN communication.
condition 2: the distance between user equipments is within the WLAN communication range.

The network side judges whether the user equipments have the capability of WLAN communication by querying register data, for example, the network side queries the register data of the user equipment from the HSS/HLR.

Preferably, if the network side has determined that the conditions of the WLAN communication are satisfied, then the network side sends WLAN communication indication information to the D2D user equipment.

Step S1108: the network side sends a response message and the parameters of the WLAN communication, wherein the response message is used for indicating the network side to accept the WLAN communication request.

Step S110: the D2D user equipments perform communication via the WLAN.

It should be noted that this step is the same as step S1006, which will not be described any more.

Step S1112, whether to perform communication via the WLAN is judged, if the judgement result is yes, go to step S1110, otherwise step S1116 is executed.

In this step, the network side monitors D2D communication, so as to guarantee the communication quality.

This step is the same as step S908, which will not be described any more.
Step S 1114: the network side sends refusal message indicating to perform communication via the network.

Preferably, the refusal message contains a refusal reason, i.e. unable to continue the communication via the WLAN.

Preferably, the network side judges that it is possible to continue the communication via the network, then indication information is sent, otherwise the network side indicates the interruption of the communication and the reason thereof.

Step S1116: a communication via the network is started, until the communication ends.

In this step, the D2D use equipments release the WLAN communication resources, and continue the communication over the resources allocated by the network side.

### Embodiment V

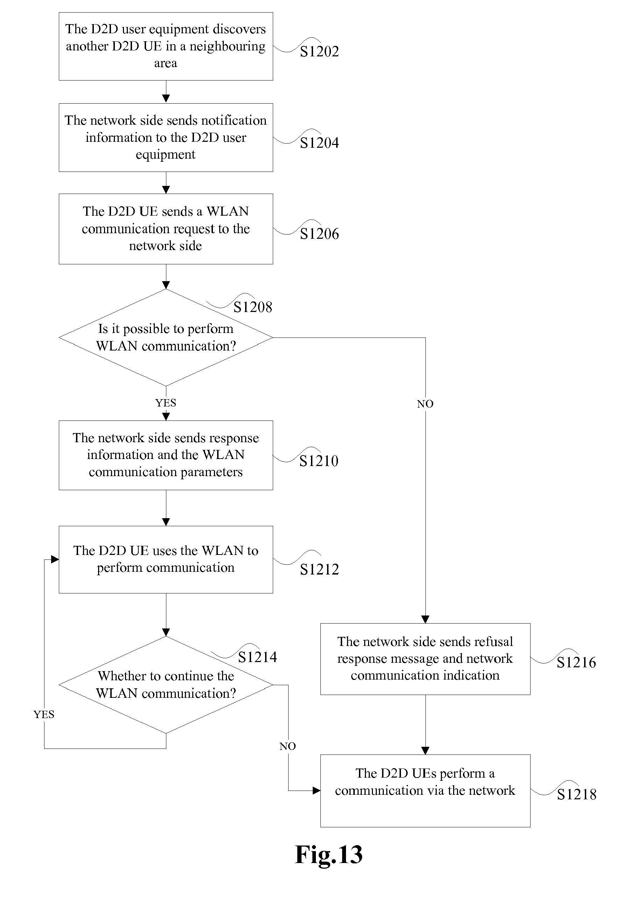

A method for a WLAN to be used in D2D communication is provided in this preferred embodiment, and the scenario of this preferred embodiment is: a network side discovers D2D user equipments, and the D2D user equipment requests a WLAN communication, Fig. 13 is a fourth flowchart of a method for D2D communication according to an embodiment of the present invention, as shown in Fig. 13, the method includes step S1202 to step S1218 as follows:
Step S1202: the network side discovers two D2D user equipments in a neighbouring area.

It should be noted that this step is the same as step S1002, which will not be described any more.

Step S1204: the network side sends notification information to the D2D user equipment in the neighbouring area.

The notification message includes: the identifier of the registered D2D user equipment in the current neighbouring area, the identifier of the D2D application on the D2D user equipment in the neighbouring area, etc.; if there is any user equipment entering or leaving the neighbouring area, the network side updates the notification message.

Step S1206: the D2D user equipment requests a WLAN communication to the network side.

In the present step, the D2D user equipment receives the notification message and finds that there is an interesting application in the neighbouring area, then the D2D user equipment is trigged to send a WLAN communication request information to the network side, and request information includes: the identifier of the D2D user equipment at the opposite side, the application identifier, the identifier of the WLAN communication, etc.

Step S1208: the network side judges whether the WLAN communication can be performed, if the judgement result is yes, step S1210 is executed, otherwise step S1216 is executed.

This step is the same as step S908, which will not be described any more.

Step S1210: the network side sends a response message and the parameters of the WLAN communication.

This step is the same as step S908, which will not be described any more.

Step S1212: the user equipment performs communication via the WLAN.

This step is the same as step S1108, which will not be described any more.

Step S1214: whether to perform communication via the WLAN is judged, if the judgement result is yes, step S1212 is executed, otherwise step S1218 is executed.

If the user equipment cannot perform direct D2D communication, and cannot perform communication via an intermediate node either, the network side switches the communication to network communication.

Step S1216: the network side sends refusal response message indicating to perform communication via the network.

This step is the same as step S1108, which will not be described any more.

Step S1218: communication via the network of the operator is started, until the communication ends.

This step is the same as step S 1116, which will not be described any more.

### Preferred embodiment VI

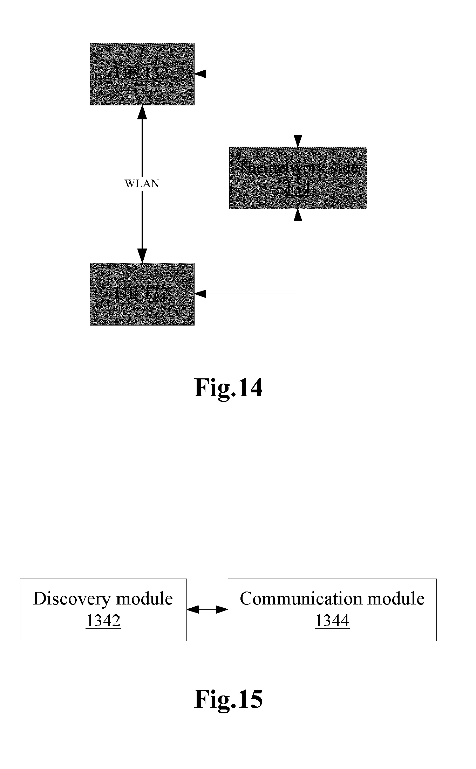

A system realizing D2D communication via a WLAN is provided in this preferred embodiment. Fig. 13 is a structural block diagram of a system for D2D communication realized with a WLAN according to an embodiment of the present invention; and as shown in Fig. 14, the system includes: a user equipment **132** (configured to execute the function of the D2D user equipment in the above-mentioned preferred embodiment) and a network side **134** (configured to execute the function of the network side of the operator in the above-mentioned preferred embodiment), and the structure will be described in detail below.

The network side **134** includes an eNB and a MME, and is configured to discover a D2D user equipment in a neighbouring area and indicate the D2D user equipment to perform communication with WLAN; and the user equipment **132** is configured to discover a D2D user equipment in a neighbouring area, and performs WLAN communication with the D2D user equipment in the neighbouring area D2D.

Preferably, the network side **134** is further configured to judge whether it is possible to perform WLAN communication, and sends a notification message to a D2D user equipment in a neighbouring area, and switches the communication mode between the WLAN and the network, and starts or end the WLAN communication according to the request from the user equipment.

Preferably, the user equipment **132** is further configured to receive the notification message of the neighbouring area, so as to request the WLAN communication within the neighbouring area.

### Preferred embodiment VII

A user equipment is also provided in the present invention. Fig. 15 is a structural block diagram of a user equipment for D2D communication over a WLAN according to an embodiment of the present invention; and as shown in Fig. 14, the user equipment includes: a discovery unit **1322** (configured to execute the function of the first discovery module **62** in the above-mentioned embodiment) and a communication module **1324** (configured to execute the function of the discovery module **64** and the first communication module **54** in the above-mentioned embodiment), and the structure is described in detail now.

The discovery module **1322** is configured to discover another D2D user equipment in the neighbouring area; and the communication unit 1324, connected to the discovery module 1322, is configured to send a WLAN communication request to the network side, and is further configured to perform WLAN communication with the D2D user equipment in the neighbouring area.

By means of the above-mentioned embodiments, a method, device and system for D2D communication are provided. It should be noted that these technical effects are not included by all of the above-mentioned implementations; some technical effects can only be obtained by some preferred implementations.

Obviously, those skilled in the art shall understand that the above-mentioned modules and steps of the disclosure can be realized by using general purpose calculating device, can be integrated in one calculating device or distributed on a network which consists of a plurality of calculating devices. Alternatively, the modules and the steps of the disclosure can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the disclosure is not restricted to any particular hardware and software combination.

The descriptions above are only the preferable embodiment of the disclosure, which are not used to restrict the disclosure, for those skilled in the art, the disclosure may have various changes and variations. Any amendments, equivalent substitutions, improvements, etc. within the principle of the disclosure are all included in the scope of the protection of the disclosure.

## Claims

1. A method for device-to-device (D2D) communication, **characterized by** comprising:
receiving, by a first D2D user equipment, a signalling from a network side of an operator, wherein the signalling is used for notifying the first D2D user equipment to perform a D2D communication by using a wireless local area network (WLAN); and
using, by the first D2D user equipment, the WLAN to directly communicate with one or more second D2D user equipment in a predetermined area.

2. The method as claimed in claim 1, **characterized in that** before the first D2D user equipment receiving the signalling from the network side of the operator, the method further comprises:
discovering, by the first D2D device, the one or more second D2D user equipment; sending, by the first D2D device, a WLAN communication request to the network side of the operator; or
discovering, by the network side of the operator, the first D2D user equipment and the one or more second D2D user equipment in the predetermined area.

3. The method according to claim 2, **characterized in that**
the WLAN communication request comprises one of the following: an identifier of the second D2D user equipment, an application identifier and a WLAN communication identifier.

4. The method according to claim 1, **characterized in that**
the signalling further comprises: WLAN communication identification information, wherein the WLAN communication indication information comprises: an identifier of the D2D user equipment participating the WLAN communication and/or parameters of the WLAN communication, wherein the WLAN communication is a direct communication between user equipment via the WLAN.

5. The method according to any one of claims 1 to 4, **characterized in that** after the first D2D user equipment communicating with the second D2D user equipment in a predetermined area by using the WLAN, the method further comprises:
the first D2D use equipment switching to the network of the operator under the control of the network side of the operator; and
the switched first D2D user equipment performing communication with the one or more D2D user equipment in the network of the operator.

6. The method according to any one of claims 1 to 4, **characterized in that** the predetermined area comprises: an area satisfying D2D discovery or an area satisfying D2D communication.

7. A method for device-to-device (D2D) communication, **characterized by** comprising:
receiving, by a network side of the operator, a wireless local area network (WLAN) communication request sent by a first D2D user equipment; or discovering, by the network side of the operator, the first D2D user equipment and one or more second D2D user equipment in the predetermined area, wherein the WLAN communication request is used for requesting a D2D communication between the first D2D user equipment and the one or more second D2D user equipment discovered by the first D2D user equipment in the predetermined area; and
sending, by the network side of the operator, a signalling to the first D2D user equipment to notify the first D2D user equipment to directly communicate with the one or more D2D user equipment by using the wireless local area network (WLAN).

8. The method according to claim 7, **characterized in that**
the WLAN communication request comprises one of the following: an identifier of the second D2D user equipment, an application identifier and a WLAN communication identifier.

9. The method according to claim 7, **characterized in that** before the network side of the operator sending the signalling to the first D2D user equipment, the method further comprises:
determining, by the network side of the operator, that the first D2D user equipment and the one or more second D2D user equipment satisfy the condition of WLAN communication.

10. The method according to claim 7, **characterized in that**
the signalling further comprises: WLAN communication identification information, wherein the WLAN communication indication information comprises: an identifier of the D2D user equipment participating the WLAN communication and/or parameters of the WLAN communication.

11. The method according to any one of claims 7 to 10, **characterized in that** after the network side of the operator sending the signalling to the first D2D user equipment, the method further comprises:
when it is judged that a preset first condition for switching from the WLAN to the network of the operator is satisfied, controlling, by the network side of the operator, the first D2D user equipment and the one or more second D2D user equipment to switch to the network of the operator for communication;
when it is judged that a preset second condition for switching from the network of the operator to the WLAN is satisfied, controlling, by the network side of the operator, the first D2D user equipment and the one or more second D2D user equipment to switch to the WLAN for communication.

12. The method according to claim 11, **characterized in that** the first condition comprises at least one of the following: policy of the operator, network load and distance of D2D communication; and the second condition comprises at least one of the following: policy of the operator, network load, and distance of D2D communication.

13. A device for device-to-device (D2D) communication, applicable to a D2D user equipment, **characterized by** comprising:
a first receiving module, configured to receive a signalling from a network side of an operator, wherein the signalling is used for notifying the D2D perform a D2Dcommunication by using a wireless local area network (WLAN); and
a first communication module, configured to use the WLAN to perform a direct communication with one or more second D2D user equipment in a predetermined area.

14. The device according to claim 13, **characterized in that** the device further comprises:
a first discovery module, configured to discover the one or more second D2D user equipment; and
a sending module, configured to send a WLAN communication request to the network side of the operator.

15. The device according to claim 13 or 14, **characterized in that** the device further comprises:
a switching module, configured to switch to the network of the operator under the control of the network side of the operator; and
a second communication module, configured to perform communication with the one or more D2D user equipment in the network of the operator.

16. A device for device-to-device (D2D) communication, applicable to a network side of the operator, **characterized by** comprising:
a third receiving module, configured to receive the wireless local area network (WLAN) communication request sent by the first D2D user equipment, wherein the WLAN communication request is used for requesting a D2D communication between the first D2D user equipment and one or more second D2D user equipment discovered by the first D2D user equipment in the predetermined area; or a second discovery module, configured to discover the first D2D use equipment and the one or more second D2D user equipment in the predetermined area; and
a sending module, configured to send a signalling to the first D2D user equipment to notify the first D2D user equipment to perform direct communication with the one or more D2D user equipment by using the WLAN.

17. The device according to claim 16, **characterized in that** the device further comprises:
a determination module, configured to determine that the first D2D user equipment and the one or more second D2D user equipment satisfy the condition of WLAN communication.

18. The device according to claim 16 or 17, **characterized in that** the device further comprises:
a first control module, configured to control the first D2D user equipment and the one or more second D2D user equipment to switch to the network of the operator for communication, when it is judged that a preset first condition for switching from the WLAN to the network of the operator is satisfied;
a second control module, configured to control the first D2D user equipment and the one or more second D2D user equipment to switch to the WLAN for communication, when it is judged that a preset second condition for switching from the network of the operator is satisfied.

19. A system for device-to-device (D2D) communication, **characterized by** comprising: a D2D communication device according to any one of claims 13 to 15 and a D2D communication device according to any one of claims 16 to 18.
